# FASCICULE DE BREVET EUROPEEN

(11) **EP 0 930 660 B1**
(45) Date de publication et mention de la délivrance du brevet: **03.11.2004**
(21) Numéro de dépôt: 98123499.0
(22) Date de dépôt: 14.12.1998
(51) Int. Cl.: H01L 41/09

(54) **Moteur pièzo-électrique à onde progressive**
Piezoelektrischer Wanderwellenmotor
Piezoelectric progressive wave motor

(30) Priorité: 16.01.1998 FR 9800438
(43) Date de publication de la demande: 21.07.1999
(73) Titulaire: FIGEST B.V., 1066 GH Amsterdam (NL)
(72) Inventeur: Petit, Lionel, 69300 Caluire et Cuire (FR)
(74) Mandataire: Meylan, Robert Maurice

(56) Documents cités:
- FR-A- 2 709 214
- FR-A- 2 734 105

## Description

L'invention a pour objet un moteur piézo-électrique à onde progressive constitué essentiellement d'un stator de forme annulaire plane associé à deux groupes d'éléments piézo-électriques cylindriques en céramique polarisés répartis régulièrement sur le stator, présentant un axe de polarisation perpendiculaire au plan du stator et excités par un courant alternatif avec un déphasage de π/2 entre les groupes de manière à engendrer à la surface du stator une déformation en forme d'onde progressive, et d'un rotor en forme de disque maintenu élastiquement en contact avec le stator pour son entraînement en rotation par l'onde progressive engendrée sur le stator.

Un tel moteur est connu du brevet FR 2 709 214. Dans ce moteur, les éléments piézo-électriques sont constitués de bâtonnets. Afin de supprimer, dans une très grande mesure, une flexion parasite des bâtonnets due à la déformation ondulatoire du stator, flexion parasite qui empêcherait un fonctionnement correct du stator et, par conséquent, du moteur, les bâtonnets sont reliés au stator par une articulation. Dans l'exécution du moteur, cette articulation est obtenue en utilisant un stator présentant des protubérances définissant entre elles des encoches de forme sensiblement elliptique, de telle sorte que les protubérances présentent un rétrécissement autorisant leur flexion, ce rétrécissement jouant ainsi le rôle d'une articulation pour les bâtonnets fixés à l'extrémité de ces protubérances. Ces protubérances sont obtenues par enlèvement de matière dans la masse d'un anneau métallique, ce qui ne peut se faire que par un usinage coûteux.

La présente invention a pour but d'obtenir le même résultat, c'est-à-dire d'empêcher une flexion parasite des éléments piézo-électriques, par des moyens moins coûteux à réaliser.

A cet effet, le moteur piézo-électrique selon l'invention est caractérisé en ce que les éléments piézo-électriques sont reliés au stator par l'intermédiaire d'une pièce de couplage auxiliaire de forme tronconique et en contact permanent avec le stator par leur extrémité de petite section.

Des pièces de couplage rigides de forme tronconique peuvent être facilement obtenues par décolletage d'une barre métallique cylindrique sur un tour automatique. Un tel procédé est très économique.

Les pièces de couplage seront, de préférence, fixées par collage aux éléments piézo-électriques et au stator, lequel peut être constitué avantageusement d'un simple anneau plat.

Les deux groupes d'éléments piézo-électriques sont disposés sur la circonférence du stator de telle manière que les ondes stationnaires générées par chacun des groupes sont décalées dans l'espace de λ/4, λ étant la longueur d'onde des ondes stationnaires. Les deux groupes d'éléments piézo-électriques sont, de préférence, imbriqués l'un dans l'autre de telle sorte que l'on rencontre alternativement un élément du premier groupe et un élément du second groupe. Cette imbrication a pour avantage de conduire à une répartition uniforme des éléments piézo-électriques sur la circonférence du stator.

Selon un mode d'exécution préféré de l'invention, les deux groupes d'éléments piézo-électriques sont imbriqués et la distance entre les éléments piézo-électriques voisins de groupes différents est égale à 3 λ/4.

Cette disposition ne modifie pas le décalage entre les ondes stationnaires générées par chacun des groupes d'éléments piézo-électriques, décalage qui reste égal à λ/4, et les éléments piézo-électriques sont encore répartis de manière uniforme sur la circonférence du stator. Par contre, l'augmentation de la distance entre deux éléments piézo-électriques consécutifs, tels que des bâtonnets, permet d'augmenter sensiblement le diamètre des bâtonnets de telle sorte que ceux-ci présentent une rigidité en flexion accrue, ce qui contribue encore à la suppression de la flexion parasite.

Le dessin annexé représente, à titre d'exemple, un mode d'exécution de l'invention.

L'unique figure du dessin est une vue développée partielle du stator avec ses excitateurs piézo-électriques.

Le stator est constitué d'un anneau plat 1 excité par des éléments piézo-électriques cylindriques en céramique polarisés tels que 2, 3, 4. Ces éléments piézo-électriques sont reliés au stator 1 par des pièces de couplage tronconiques rigides telles que 5, 6, 7, par exemple en dural. Ces pièces tronconiques présentent une base de même diamètre que le diamètre des éléments piézo-électriques par laquelle elles sont fixées par collage aux éléments piézo-électriques, et une extrémité de petit diamètre par laquelle elles sont fixées par collage au stator 1.

Les éléments piézo-électriques sont répartis en deux groupes imbriqués l'un dans l'autre, de sorte que les éléments piézo-électriques 2 et 4 appartiennent à l'un des groupes et l'élément piézo-électrique 3 appartient à l'autre groupe. La distance entre deux éléments piézo-électriques consécutifs est égale à 3λ/4, λ étant la longueur d'onde des ondes stationnaires générées par chacun des groupes d'éléments piézo-électriques. Ces ondes stationnaires sont, par conséquent, décalées dans l'espace de λ/4 .

La distance entre deux éléments piézo-électriques consécutifs pourrait bien entendu être égale à λ/4 comme dans l'art antérieur cité

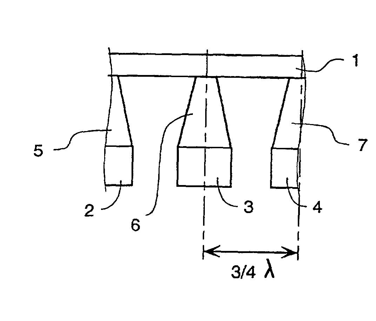

Le stator représenté, et de manière générale le stator selon l'invention, peut être utilisé par exemple dans un moteur tel que représenté à la figure 5 du brevet FR 2 709 214.

## Revendications

1. Moteur piézo-électrique à onde progressive constitué essentiellement d'un stator (1) de forme annulaire plane associé à deux groupes d'éléments piézo-électriques cylindriques (2, 3, 4) en céramique polarisés répartis régulièrement sur le stator, présentant un axe de polarisation perpendiculaire au plan du stator et excités par un courant alternatif avec un déphasage de π/2 entre les groupes de manière à engendrer à la surface du stator une déformation en forme d'onde progressive, et d'un rotor en forme de disque maintenu élastiquement en contact avec le stator pour son entraînement en rotation par l'onde progressive engendrée sur le stator, **caractérisé en ce que** les éléments piézo-électriques sont reliés au stator par l'intermédiaire d'une pièce de couplage auxiliaire (5, 6, 7) de forme tronconique et en contact permanent avec le stator par leur extrémité de petite section.

2. Moteur selon la revendication 1, dans lequel les deux groupes d'éléments piézo-électriques sont imbriqués, **caractérisé en ce que** la distance entre deux éléments piézo-électriques voisins de groupes différents est égale à 3λ/4.

## Claims

1. A traveling-wave piezoelectric motor having essentially a stator (1) in the form of an annular plate, the stator connected to two groups of cylindrical polarized ceramic piezoelectric elements (2, 3, 4) uniformly distributed on the stator, presenting a polarization axis perpendicular to the plane of the stator and excited by an alternating current with a phase shift of π/2 between the groups so as to generate a deformation in the form of a traveling wave at the surface of the stator, and a rotor in the form of a disk held elastically in contact with the stator for its rotational driving by the traveling-wave generated by the stator, **characterized in that** the piezoelectric elements are connected to the stator by the intermediary of an auxiliary coupling piece (5, 6, 7) in the form of a truncated segment and in permanent contact with the stator by their small-section extremity.

2. The motor according to claim 1, in which the two groups of piezoelectric elements are embedded, **characterized in that** the distance between two adjacent piezoelectric elements of different groups is equal to 3λ/4.

## Patentansprüche

1. Piezoelektrischer Wanderwellenmotor, bestehend im wesentlichen aus einem flachen ringförmigen Ständer (1), der mit zwei Gruppen von polarisierten keramischen piezoelektrischen Elementen (2, 3, 4) zylindrischer Form verbunden ist, welche gleichmässig auf dem Ständer verteilt sind, eine senkrecht zur Ebene des Ständers liegende Polarisationsachse haben und durch einen Wechselstrom mit einer Phasenverschiebung von π/2 zwischen den Gruppen erregt werden, um an der Oberfläche des Ständers eine Verformung in Form einer Wanderwelle zu erzeugen, und aus einem scheibenförmigen Läufer, der elastisch mit dem Ständer in Kontakt gehalten wird, damit er durch die auf dem Ständer erzeugte Wanderwelle in Drehung versetzt wird, **dadurch gekennzeichnet, dass** die piezoelektrischen Elemente mit dem Ständer mittels eines kegelstumpfförmigen Hilfskopplungsstücks (5, 6, 7) verbunden sind, das sich mit der kleiner Endfläche des Kegelstumpfs in ständigem Kontakt mit dem Ständer befindet.

2. Motor nach Anspruch 1, bei welchem die beiden Gruppen der piezoelektrischen Elemente verschachtelt sind, **dadurch gekennzeichnet, dass** der Abstand zwischen zwei benachbarten piezoelektrischen Elementen verschiedener Gruppen 3λ/4 beträgt.
